**Europäisches Patentamt**

**European Patent Office**

**Office européen des brevets**

(11) Veröffentlichungsnummer: **0 532 891 B1**

(12) **EUROPÄISCHE PATENTSCHRIFT**

(45) Veröffentlichungstag der Patentschrift: **22.11.95**

(51) Int. Cl.6: **B30B 1/32**, F16C 32/06, B30B 15/00

(21) Anmeldenummer: **92113378.1**

(22) Anmeldetag: **05.08.92**

(54) **Pressvorrichtung.**

(30) Priorität: **16.09.91 DE 4130762**

(43) Veröffentlichungstag der Anmeldung:
**24.03.93 Patentblatt 93/12**

(45) Bekanntmachung des Hinweises auf die
Patenterteilung:
**22.11.95 Patentblatt 95/47**

(84) Benannte Vertragsstaaten:
**DE ES FR IT**

(56) Entgegenhaltungen:
**EP-A- 0 326 980**
**DE-C- 554 810**
**GB-A- 841 479**
**US-A- 4 470 787**

(73) Patentinhaber: **Dorst Maschinen und Anlagenbau Otto Dorst und Dipl.-Ing Walter Schlegel GmbH & Co.**
**Mittenwalder Strasse 61**
**D-82431 Kochel (DE)**

(72) Erfinder: **Menzel, Fritz**
**Von-Velsenstrasse 12**
**W-8113 Kochel-Ried (DE)**

(74) Vertreter: **Bockhorni, Josef, Dipl.-Ing. et al**
**Herrmann-Trentepohl, Kirschner,**
**Grosse, Bockhorni & Partner**
**Forstenrieder Allee 59**
**D-81476 München (DE)**

## Beschreibung

Die Erfindung betrifft eine Preßvorrichtung mit einem Preßzylinder, einem in dem Preßzylinder geführten Preßkolben und einer Preßtraverse. Die Preßvorrichtung dient insbesondere zum Pressen von Fliesen aus keramischem Pulver.

Bei einer derartigen, bekannten Fliesenpresse wird angestrebt, die über Zylinder und Kolben eingeleitete Preßkraft möglichst gleichmäßig über die gesamte Preßfläche in der Preßform zu verteilen. Allerdings ist die Füllung der Preßform in der Fliesenpresse praktisch nie vollkommen gleichmäßig über die Preßfläche verteilt, da meist durch den Rücklauf des Füllers im hinteren Bereich der Form eine etwas dichtere Packung des eingefüllten, zu pressenden Granulates entsteht. Zur Erzeugung einer gleichmäßigen Verdichtung des Preßgranulates ist daher eine leichte Schrägstellung der Preßstempel zueinander erforderlich. Die gepreßten Platten sind dann zwar in der Dicke leicht keilig, aber gleichmäßig verdichtet. Beim Brennen ist die Schwindung der Platten gleichmäßig und sie erhalten ihre korrekte geometrische Form.

Um die erwähnte Schrägstellung der Preßstempel zueinander zu erreichen, muß die Preßtraverse mit den Oberstempeln leichte Kippbewegungen machen. Zur Erreichung dieser Kippstellung wurden bereits einige Konstruktionen vorgeschlagen. So ist es bereits bekannt, daß die Preßkraft vom Preßkolben über eine Kugelpfanne auf die Preßtraverse übertragen wird. Allerdings tritt bei den bekannten Konstruktionen der Nachteil auf, daß beim Preßvorgang trotz ständiger und optimaler Schmierung eine erhebliche Reibkraft auftritt, die der Kippbewegung der Preßtraverse entgegenwirkt. Dies führt dazu, daß trotz der aufwendigen Konstruktion die erwünschte gleichmäßige Verdichtung des Preßgranulates nicht stattfindet.

Aufgabe der Erfindung ist es, eine Fliesenpresse der eingangs genannten Art dahingehend zu verbessern, daß die Nachteile bekannter Fliesenpressen vermieden werden und insbesondere in einfacher Weise eine gleichmäßige Verdichtung des Preßgranulats erreicht wird.

Diese Aufgabe wird erfindungsgemäß im wesentlichen durch das Kennzeichen des Anspruchs 1 gelöst. Hierzu ist vorgesehen, daß zwischen Preßzylinder und Preßtraverse ein hydrostatisches Lager angeordnet ist. Der Einsatz eines hydrostatischen Lagers bietet grundsätzlich den Vorteil, daß bei der hydrostatischen Kraftübertragung keine Reibkräfte entstehen, die einer Kippbewegung der Preßtraverse entgegenstehen.

Das erfindungsgemäße Lager ist mit einem zwischen Preßzylinder und Preßkolben befindlichen oberen Raum und einem zwischen Preßkolben und Preßtraverse befindlichen freigestellten unteren Raum versehen, wobei der obere Raum und der untere Raum miteinander kommunizieren und der Preßkolben sich zumindest mittelbar auf der Preßtraverse abstützt. "Zumindest mittelbar" bedeutet, daß sich der Preßkolben entweder direkt oder auf einem oder mehreren Elementen, die zwischen Kolben und Traverse angeordnet ist/sind, abstützt. Da die Räume miteinander in Verbindung stehen, kann ein Ausgleich von Hydaulikflüssigkeit im Lager zwischen den Räumen stattfinden, wobei hierdurch auch gewährleistet ist, daß in beiden Räumen der gleiche Druck herrscht.

Schließlich ist gemäß dem Erfindungsgedanken vorgesehen, daß auf der Unterseite des Preßkolbens eine den unteren Raum abdichtende Dichtung angeordnet ist, deren Wirkdurchmesser geringer ist als der Wirkdurchmesser des Preßkolbens, der auf seiner Unterseite zur Schaffung des unteren Raums bis zum Wirkdurchmesser der Dichtung freigestellt ist. Hierdurch ist sichergestellt, daß der größte Teil der eingeleiteten Kraft hydrostatisch in die Preßtraverse eingeleitet wird. Lediglich ein geringer Teil der eingeleiteten Kraft wird mechanisch über den Preßkolben, der sich zu diesem Zweck zumindest mittelbar auf der Preßtraverse abstützt, in die Preßtraverse eingeleitet.

Daher kann auch nur dieser geringe Teil der insgesamt eingeleiteten Kraft eine Reibkraft erzeugen. Ein geringer Anteil an mechanisch übertragener Kraft ist jedoch erforderlich, um auf die Dichtung eine Kraft auszuüben, so daß diese insbesondere bei Belastung abdichten kann. Die Gewichtskraft des Preßstempels allein reicht hierzu, vor allem bei hohen Drükken, nicht aus.

Daraus ergibt sich, daß die entstehende Reibkraft bei der erfindungsgemäßen Fliesenpresse sehr gering ist und leicht überwunden werden kann, so daß die Preßtraverse zur Erreichung eine gleichmäßigen Verdichtung ohne weiteres in ausreichender Weise gekippt werden kann.

Aus der DE-OS 38 02 761 und der EP 0 326 980 A2 ist jeweils eine hydraulische Presse zum Formteilpressen von faserverstärkten Kunststoffen bekannt. Diese bekannte Presse weist weist zwei Preßzylinder mit Plunger und einen Pressenstößel auf, der über hydrostatische Lager mit den Preßzylindern verbunden ist. Jedes hydrostatische Lager weist einen Ringkörper auf, der den Plunger umgibt. Der Ringkörper stützt sich auf einer Dichtung, die auf dem Pressenstößel liegt, ab. Um eine zumindest querkraft- und momentenarme Relativbewegung zwischen Preßzylinder und Pressenstößel zu gewährleisten, ist unter anderem vorgesehen, daß der Wirkdurchmesser der Abdichtung gegenüber dem Pressenstößel kleiner ist als der Durchmesser des in den Ringkörper eintauchenden Endes der Kolbenstange.

Allerdings stützt sich bei diese Kunststoffpresse der Plunger weder mittelbar, noch unmittelbar auf dem Pressenstößel ab, was auch nicht vorgesehen und sogar vermieden werden muß. Bei der bekannten Presse schwimmt der Plunger im Lager, ohne sich auf dem Pressenstößel abzustützen . Würde der Kolben aufsetzen, wäre dies mit einer enormen mechanischen Reibung verbunden, da dann ein Großteil der eingeleiteten Kraft mechanisch übertragen werden würde. Die mechanische Kraftübertragung erfolgt bei dieser bekannten Presse über die unterhalb des Ringkörpers befindliche Dichtung, die hierdurch einem gewissen Verschleiß unterliegt. Desweiteren liegt keine Verbindung zwischen dem oberhalb und unterhalb des Plungers befindlichen Räumen vor. Schließlich ist das hydraulische Lager insgesamt aus relativ vielen Einzelteilen hergestellt und nur zeitaufwendig zusammenzusetzen.

Zur mechanischen Kraftübertragung ist erfindungsgemäß vorgesehen, daß der Preßkolben an seiner Unterseite ein Übertragungselement aufweist, welches den Anteil der insgesamt eingeleiteten Kraft überträgt, der nicht hydrostatisch übertragen wird. Statt der einteiligen Ausbildung von Übertragungselement und Preßkolben kann diesem auch ein separates Übertragungselement zugeordnet sein.

Um die mechanisch übertragene Kraft im wesentlichen gleichmäßig in die Preßtraverse einzuleiten, bietet es sich an, das Übertragungselement als Stützring auszubilden.

Um eine möglichst geringe Reibung zwischen Kolben und Traverse zu haben, hat es sich als vorteilhaft erwiesen, wenn auf der Preßtraverse eine Gleitplatte angeordnet ist, auf der sich der Preßkolben abstützt.

In Weiterbildung dieses Erfindungsgedankens bietet es sich besonders an, daß der Stützring und die Preßtraverse bzw. die Gleitplatte aus einem Material oder Materialien mit geringem Reibbeiwert bestehen. Bei dem Material könnte es sich vorzugsweise jeweils um Stahl oder Stahl und Messing handeln.

Damit der Preßkolben auch im drucklosen Zustand des Preßzylinders den axialen Bewegungen der Preßtraverse folgt, ist erfindungsgemäß ein Halteelement, daß Preßkolben und Preßtraverse miteinander verbindet, vorgesehen.

In einer konstruktiv besonders einfach ausgestalteten Ausführungsform dieses Erfindungsgedankens weist der Preßkolben im Bereich seines der Preßtraverse zugewandten Endes eine vorzugsweise umlaufende Schulter auf. Die Schulter wiederum wird von dem mit der Preßtraverse befestigbaren Halteelement in axialer Richtung gehalten.

Um eine relative seitliche Bewegung der Traverse gegenüber dem Kolben zu ermöglichen und gleichzeitig in gewünschten Bereichen zu begrenzen, ist seitlich zwischen Schulter und Halteelement ein als Spiel ausgebildeter Zwischenraum vorgesehen. Erst wenn die Schulter seitlich am Halteelement anschlägt, ist keine Relativbewegung mehr möglich.

Um die Schulter des Kolbens möglichst allseitig und gleichmäßig zu halten, ist vorgesehen, daß das Halteelement als Ring ausgebildet ist.

Wenn eine Gleitplatte auf der Preßtraverse angeordnet ist, hält das Halteelement nicht nur den Kolben, sondern es fixiert auch die Gleitplatte auf der Preßtraverse.

Um ein Auslaufen der Hydraulikflüssigkeit während des Anhebens und das Eindringen von Luft zu vermeiden, hat es sich als besonders vorteilhaft erwiesen, die Dichtung als Axialdichtung auszubilden, die eine Dichtwirkung sowohl in axialer als auch in radialer Richtung ausübt.

Damit der über das Halteelement mit der Traverse verbundene Kolben der Kippbewegung der Preßtraverse im gewünschten Umfang folgen kann, bietet es sich an, wenn in der Bohrung des Preßzylinders ein Führungselement geringer axialer Erstreckung angeordnet ist. Dieses Führungselement dient zum einen der Führung des Kolbens, zum anderen kann der Kolben aufgrund der axialen Kürze der Führung um diese kippen. Hierbei handelt es sich um eine zusätzliche Maßnahme zur Vergrößerung des Kippwinkels. Grundsätzlich kann jeder Kolben in dem dazugehörigen Zylinder in begrenztem Umfang aufgrund des Spiels zwischen Zylinder und Kolben kippen.

Wenn das Führungselement als elastischer Führungsring, der bspw. aus Kunststoff besteht, ausgebildet ist, wird der Bereich der möglichen Verschwenkung vergrößert.

In einer Ausführungsform der Erfindung ist die Oberseite der Gleitplatte bzw., wenn eine solche nicht vorhanden ist, die Oberseite der Traverse eben ausgebildet ist. Die erforderliche Kippbewegung der Traverse erfolgt hierbei derart, daß sich Traverse bzw. Gleitplatte gegenüber dem Kolben verschieben, während gleichzeitig der Kolben um das Führungselement kippt.

Eine andere besonders vorteilhafte Ausführungsform der Erfindung sieht vor, daß die Oberseite der Gleitplatte und die Unterseite des Preßkolbens kugelförmig ausgebildet sind. Hierbei liegt der Mittelpunkt des Kugelabschnitts in der Preßebene. Bei dieser Ausführungsform kann die Preßtraverse die erforderlichen Kippbewegungen ausführen, ohne daß dabei eine wesentliche Schrägstellung des Kolbens erreicht wird.

Um die Verbindung des oberen Raums mit dem unteren Raum in besonders einfacher Weise herzustellen, ist erfindungsgemäß im Preßkolben wenigstens eine Verbindungsbohrung vorgesehen.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung, auch unabhängig von ihrer Zusammenfassung in den Ansprüchen oder deren Rückbeziehung.

Es zeigen:

Fig. 1    eine teilweise Querschnittsansicht einer hydrostatischen Kraftübertragung an einer erfindungsgemäßen Preßvorrichtung und

Fig. 2    eine andere Ausführungsform der erfindungsgemäßen Preßvorrichtung in ausschnittweiser Querschnittsdarstellung.

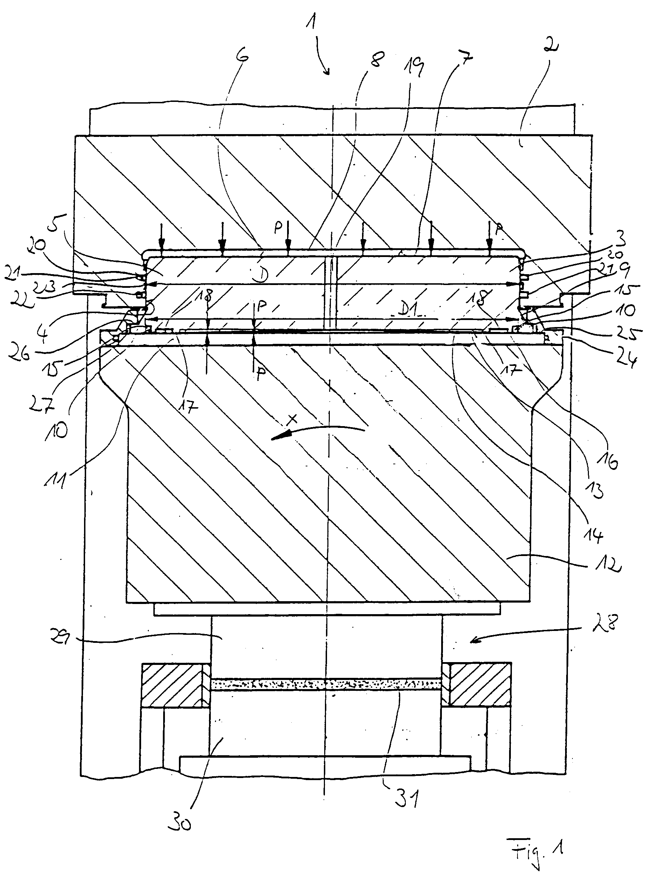

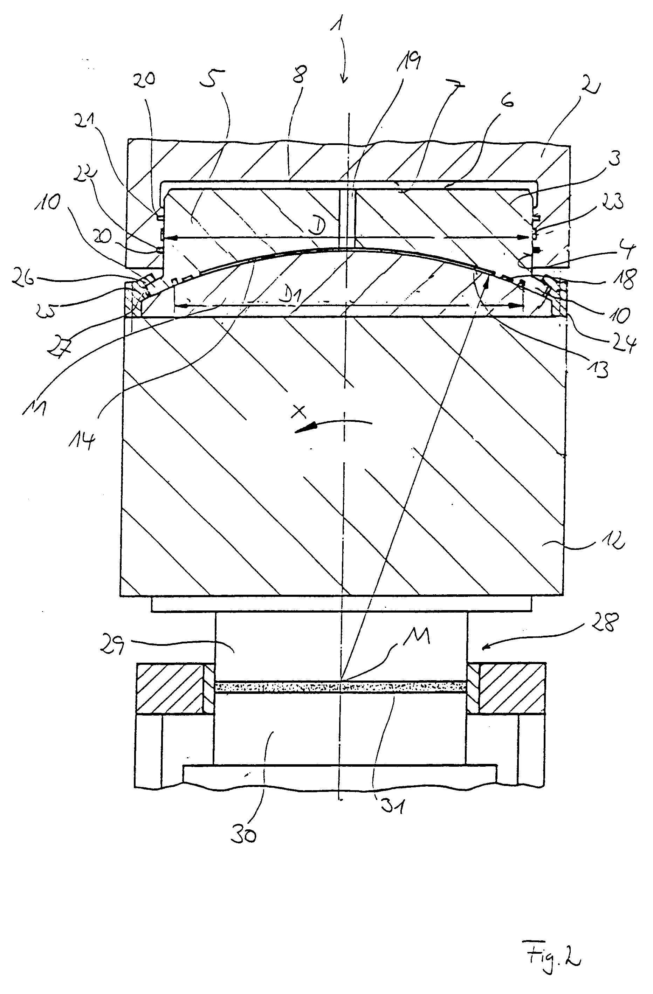

In den Fig. 1 und 2 ist ausschnittweise eine Preßvorrichtung 1 zum Pressen von Fliesen dargestellt. Die Preßvorrichtung 1 weist einen Preßzylinder 2 auf, in dem ein Preßkolben 3 geführt ist. Im Preßzylinder 2 ist eine Bohrung 4 für den Preßkolben 3 vorgesehen, deren Durchmesser geringfügig größer ist als der Durchmesser des Preßkolbens 3. Der wirksame Kolbendurchmesser wird mit D bezeichnet. Der Preßkolben 3 weist einen zylindrischen Abschnitt 5 auf, der in die Bohrung 4 eingesetzt ist. Die Höhe des zylindrischen Abschnitts 5 ist geringer als die Tiefe der Bohrung 4, so daß zwischen der Oberseite 6 des Preßkolbens 3 und der Stirnwandung 7 des Preßzylinders 2 ein Zylinderraum 8 ausgebildet ist. An den zylindrischen Abschnitt 5 des Preßkolbens 3 schließt sich bei der in Fig. 1 dargestellten Ausführungsform ein sich nach außen hin erweiternder Bereich 9 an, der in eine umlaufende Schulter 10 übergeht. Bei der Ausführungsform nach Fig. 2 geht der zylindrische Bereich 5 unmittelbar in die Schulter 10 über.

Der Preßkolben 3 stützt sich auf einer Gleitplatte 11 ab, die wiederum auf einer Preßtraverse 12 angeordnet ist. Damit die Gleitplatte 11 flach auf der Preßtraverse 12 aufliegt, ist die Unterseite der Gleitplatte 11 eben ausgebildet. Im Ausführungsbeispiel nach Fig. 1 ist die Oberseite der Gleitplatte 11 ebenfalls eben ausgebildet, während bei der Ausführungsform nach Fig. 2 die Oberseite der Gleitplatte 11 und die Unterseite 13 des Preßkolbens 3 kugelförmig ausgebildet sind.

Zwischen der Unterseite 13 des Preßkolbens 3 und der Gleitplatte 11 ist ein Raum 14 ausgebildet, der bis zum Wirkdurchmesser D1 einer Dichtung 15 freigestellt ist, die auf der Unterseite 13 des Preßkolbens 3 angeordnet ist. Die Dichtung 15 befindet sich zwischen der Schulter 10 und einem Steg 16. Der Wirkdurchmesser D1 der Dichtung 15 ist geringfügig kleiner ist als der wirksame Kolbendurchmesser D. Die Dichtung 15 ist derart ausgebildet, daß sie sowohl radial, als auch axial abdichtet. An den Steg 16 schließt sich in radialer Richtung ein weiterer Steg 17 an. Zwischen den beiden Stegen 16, 17 befindet sich ein Stützring 18 zur mechanischen Kraftübertragung, der auf der Gleitplatte 11 aufliegt.

Der Zylinderraum 8 und Raum 14 sind über wenigstens eine Verbindungsbohrung 19 miteinander verbunden. In der Räumen 8 und 14 sowie der Verbindungsbohrung 19 befindet sich eine hydraulische Flüssigkeit. Während die Axialdichtung 15 den Austritt der Flüssigkeit an der Unterseite 13 des Preßkolbens verhindet, sind in der Bohrung 4 des Preßzylinders 2 zwei Nuten 20 vorgesehen, in denen jeweils eine Radialdichtung 21, 22 angeordnet, so daß zwischen Preßzylinder 2 und Preßkolben 3 keine Hydraulikflüssigkeit entweichen oder Luft eindringen kann.

Desweiteren ist in der Bohrung 4 des Preßzylinders 2 in einer weiteren Nut ein Führungselement 23 vorgesehen. Dieses Führungselement 23 hat eine geringe axiale Erstreckung und besteht vorzugsweise aus einem elastischen Material, wie Kunststoff.

Der Preßkolben 3 ist über einen Ring 24 mit der Preßtraverse 12 verbunden. Mit dem Ring 24, der bspw. mit der Preßtraverse 12 verschraubt ist, wird der Preßkolben 3 in axialer Richtung gehalten und die Gleitplatte 11 fixiert. Hierzu weist der Ring 24 weist zwei Stufen 25, 26 auf, wobei die Stufe 25 die Gleitplatte 11 und die Stufe 26 die Schulter 10 übergreift. Seitlich zwischen der Schulter 10 und der Stufe 26 ist ein als Spiel zur Aufnahme von Bewegungen ausgebildeter Zwischenraum 27 vorgesehen.

Um das in der Preßform 28 mit Preßstempeln 29, 30 befindliche Preßgranulat 31 gleichmäßig zu verdichten, wird eine Kraft vom Preßzylinder 2 auf das im Zylinderraum 8 befindliche Druckmittel übertragen, die im Druckmittel einen Druck p, der durch Pfeile dargestellt ist, erzeugt. Der Druck p wirkt auf die Oberseite 6 des Preßkolbens 3 und erzeugt eine hydrostatische Kraft $F = A * p$, mit A als der wirksamen Fläche der Oberseite 6, die sich aus dem wirksamen Kolbendurchmesser D ergibt. Der obere Raum 8 und der untere Raum 14 kommunizieren über die Bohrung 19, so daß in beiden Räumen 8, 14 der gleiche Druck p herrscht.

Auf die Oberseite der Gleitplatte 11 und damit auf die Preßtraverse 12 wirkt die hydostatische Kraft $F1 = A1 * p$, mit A1 als der wirksamen Fläche der Oberseite der Gleitplatte 11, die vom Wirkdurchmesser D1 der Dichtung 15 bestimmt wird. Im vorliegenden Falle kann das Druckmittel an einigen Stellen durch den Stützring 18 hindurchtreten. Da der Wirkdurchmesser D1 kleiner ist als der Wirk-durchmesser D und damit auch die Fläche A1 kleiner als die Fläche A (bei konstantem Druck p), ergibt sich, daß auch die Kraft F1 kleiner als die Kraft F ist. Die Differenz zwischen diesen beiden Kräften, die Kraft F 2 = (A - A 1) * p, wird bei Belastung über den Stützring 18 auf die Preßtraverse übertragen (zuzüglich der Gewichtskraft des Preßkolbens). Auch nur diese Kraft F 2 kann eine Reibkraft erzeugen. Durch die Wahl von D und D 1 kann die Reibkraft somit beliebig klein gehalten werden.

Soll bei der Ausführungsform nach Fig. 1 der Preßstempel 29 und damit die Preßtraverse 12 nun in Pfeilrichtung X gekippt werden, verschiebt sich die Preßtraverse 12 gegenüber dem Preßkolben 3 im dargestellten Schnitt nach links. Gleichzeitig kippt der Preßkolben 3 geringfügig um das Führungselement 23, was die geringe axiale Erstreckung des Führungselementes 23 erlaubt.

Bei der Ausführungsform nach Fig. 2 kann die Gleitplatte 11 und damit die Preßtraverse 12 entlang des Umfangs des Kugelabschnitts in Pfeilrichtung X verkippt werden, bis die recht Schulter 10 am Ring anschlägt. Hierbei kann der Preßkolben 3 auch axial länger ausgeführt sein, da eine wesentliche Schrägstellung des Kolbens nicht erforderlich ist. Bei der Ausführungsform nach Fig. 1 ist entweder der Preßkolben 3 entsprechend kurz auszuführen, oder ein entsprechendes Spiel zwischen der Bohrung 4 und dem Kolben 3 vorzusehen, um eine Kippbewegung zu ermöglichen.

**Patentansprüche**

1. Preßvorrichtung (1), insbesondere zum Pressen von Fliesen mit einem Preßzylinder (2), einem in dem Preßzylinder (2) geführten Preßkolben (3) und einer Preßtraverse (12), **dadurch gekennzeichnet**, daß zwischen Preßzylinder (2) und Preßtraverse (12) ein hydrostatisches Lager mit einem zwischen Preßzylinder (2) und Preßkolben (3) befindlichen oberen Raum (8) und einem zwischen Preßkolben (3) und Preßtraverse (12) befindlichen unteren Raum (14) vorgesehen ist, wobei der obere Raum (8) und der untere Raum (14) miteinander kommunizieren und der Preßkolben (3) sich auf der unteren Fläche des unteren Raums (14) abstützt und daß zwischen der Unterseite (13) des Preßkolbens (3) und der unteren Fläche des unteren Raums (14) eine Dichtung (15) angeordnet ist, deren Wirkdurchmesser (D1) geringer ist als der Wirkdurchmesser (D) des Preßkolbens (3).

2. Preßvorrichtung nach Anspruch 1, **dadurch gekennzeichnet**, daß der Preßkolben (3) an seiner Unterseite (13) ein Übertragungselement (18) zur mechanischen Kraftübertragung aufweist oder diesem eines zugeordnet ist.

3. Preßvorrichtung nach Anspruch 2, **dadurch gekennzeichnet**, daß das Übertragungselement als Stützring (18) ausgebildet ist.

4. Preßvorrichtung nach einem oder mehreren der Ansprüche 1 bis 3, **dadurch gekennzeichnet**, daß auf der Preßtraverse (12) eine Gleitplatte (11) angeordnet ist, auf der sich der Preßkolben (3) abstützt.

5. Preßvorrichtung nach einem oder mehreren der Ansprüche 1 bis 4, **dadurch gekennzeichnet**, daß das Übertragungselement (18) und die Preßtraverse (12) bzw. die Gleitplatte (11) aus einem Material oder Materialien mit geringem Reibbeiwert bestehen.

6. Preßvorrichtung nach einem oder mehreren der Ansprüche 1 bis 5, **dadurch gekennzeichnet**, daß der Preßkolben (3) über ein Halteelement (24) mit der Preßtraverse (12) verbunden ist.

7. Preßvorrichtung nach Anspruch 6, **dadurch gekennzeichnet**, daß der Preßkolben (3) im Bereich seines der Preßtraverse (12) zugewandten Endes eine Schulter (10) aufweist, die von dem mit der Preßtraverse (12) befestigbaren Halteelement (24) gehalten wird.

8. Preßvorrichtung nach Anspruch 6 oder 7, **dadurch gekennzeichnet**, daß daß seitlich zwischen Schulter (10) und Halteelement (24) ein als Spiel ausgebildeter Zwischenraum (27) vorgesehen ist.

9. Preßvorrichtung nach einem oder mehreren der Ansprüche 6 bis 8, **dadurch gekennzeichnet**, daß das Halteelement als Ring (24) ausgebildet ist.

10. Preßvorrichtung nach einem oder mehreren der Ansprüche 6 bis 9, **dadurch gekennzeichnet**, daß das Halteelement (24) die Gleitplatte (11) fixiert.

11. Preßvorrichtung nach einem oder mehreren der Ansprüche 1 bis 10, **dadurch gekennzeichnet**, daß die Dichtung (15) als Axialdichtung mit Dichtwirkung in axialer und in radialer Richtung ausgebildet ist.

12. Preßvorrichtung nach einem oder mehreren der Ansprüche 1 bis 10, **dadurch gekennzeichnet**, daß in der Bohrung (4) des Preßzylinders (2) ein Führungselement (23) geringer axialer Erstreckung angeordnet ist.

**13.** Preßvorrichtung nach Anspruch 12, **dadurch gekennzeichnet**, daß das Führungselement (23) als elastischer Führungsring, vorzugsweise aus Kunststoff, ausgebildet ist.

**14.** Preßvorrichtung nach einem oder mehreren der Ansprüche 1 bis 13, **dadurch gekennzeichnet**, daß die Oberseite der Gleitplatte (11) eben ausgebildet ist.

**15.** Preßvorrichtung nach einem oder mehreren der Ansprüche 1 bis 13, **dadurch gekennzeichnet**, daß die Oberseite der Gleitplatte (11) und die Unterseite (13) des Preßkolbens (3) kugelförmig ausgebildet sind, wobei der Mittelpunkt (M) des Kugelabschnitts in der Preßebene liegt.

**16.** Preßvorrichtung nach einem oder mehreren der Ansprüche 1 bis 15, **dadurch gekennzeichnet**, daß die Verbindung des oberen Raums (8) mit dem unteren Raum (14) aus wenigstens einer Verbindungsbohrung (19) im Preßkolben (3) besteht.

**Claims**

**1.** A press (1), more particularly for pressing tiles, comprising a cylinder (2), a plunger (3) guided in the cylinder (2) and a cross-member (12), characterised in that a hydrostatic bearing comprising an upper chamber (8) between the cylinder (2) and plunger (3) and a lower chamber (14) between the plunger (3) and cross-member (12) is disposed between the cylinder (2) and the cross-member (12), the upper chamber (8) and the lower chamber (14) communicating with each other and the plunger (3) bearing on the lower surface of the lower chamber (14), and in that a seal (15) is disposed between the underside (13) of the plunger (3) and the lower surface of the lower chamber (14), the effective diameter (D1) of the seal being less than the effective diameter (D) of the plunger (3).

**2.** A press according to claim 1, characterised in that the plunger (3) has, on its underside (13), a transmission element (18) for mechanical force transmission, or is associated with such an element.

**3.** A press according to claim 2, characterised in that the transmission element is a thrust ring (18).

**4.** A press according to one or more of claims 1 to 3, characterised in that a guide plate (11) on which the plunger (3) bears is disposed on the cross-member (12).

**5.** A press according to one or more of claims 1 to 4, characterised in that the transmission element (18), the cross-member (12) and/or the guide plate (11) are made of a material or materials having a low coefficient of friction.

**6.** A press according to one or more of claims 1 to 5, characterised in that the plunger (3) is connected to the cross-member (12) by a retaining element (24).

**7.** A press according to claim 6, characterised in that the plunger (3) has, in the region of its end facing the cross-member (12), a shoulder (10) held by the retaining element (24) securable to the cross-member (12).

**8.** A press according to claim 6 or 7, characterised in that a clearance in the form of a space (27) is provided at the side between the shoulder (10) and the retaining element (24).

**9.** A press according to one or more of claims 6 to 8, characterised in that the retaining element is a ring (24).

**10.** A press according to one or more of claims 6 to 9, characterised in that the retaining element (24) secures the guide plate (11).

**11.** A press according to one or more of claims 1 to 10, characterised in that the seal (15) is an axial seal with sealing action in the axial and in the radial direction.

**12.** A press according to one or more of claims 1 to 10, characterised in that a guide element (23) of small axial dimension is disposed in the bore (4) of the cylinder (2).

**13.** A press according to claim 12, characterised in that the guide element (23) is a resilient guide ring, preferably of plastic.

**14.** A press according to one or more of claims 1 to 13, characterised in that the top surface of the guide plate (11) is flat.

**15.** A press according to one or more of claims 1 to 13, characterised in that the top of the guide plate (11) and the underside (13) of the plunger (3) are spherical, the centre (M) of the spherical portion lying in the pressing plane.

**16.** A press according to one or more of claims 1 to 15, characterised in that the connection between the upper chamber (8) and the lower chamber (14) consists of at least one communicating bore (19) in the plunger (3).

## Revendications

**1.** Dispositif de pressage (1) destiné en particulier au pressage de carreaux avec un cylindre à presser (2), un cylindre de compression (3) guidé dans le cylindre à presser (2) et une traverse de pressage (12), caractérisé en ce qu'entre le cylindre à presser (2) et la traverse de pressage (12) est prévu un palier hydrostatique avec un espace supérieur (8) situé entre le cylindre à presser (2) et le piston de compression (3) et avec un espace inférieur (14) situé entre un piston de compression (3) et une traverse de pressage (12), l'espace supérieur (8) et l'espace inférieur (14) communiquant entre eux et le piston de compression (3) s'appuyant sur la surface inférieure de l'espace inférieur (14) et en ce qu'entre la face inférieure (13) du piston de compression (3) et la surface inférieure de l'espace inférieur (14) est disposé un joint d'étanchéité (15) dont le diamètre actif (D1) est plus faible que le diamètre actif (D) du piston de compression (3).

**2.** Dispositif de pressage selon la revendication 1, caractérisé en ce que le piston de compression (3) présente, sur sa face inférieure (13), un élément de transmission (18) pour la transmission mécanique de force ou en ce qu'un élément de transmission est affecté à ce piston.

**3.** Dispositif de pressage selon la revendication 2, caractérisé en ce que l'élément de transmission se présente sous la forme d'une bague d'appui (18).

**4.** Dispositif de pressage selon l'une ou plusieurs des revendications 1 à 3, caractérisé en ce que sur la traverse de pressage (12) est disposée une plaque de glissement (11) sur laquelle s'appuie le piston de compression (3).

**5.** Dispositif de pressage selon l'une ou plusieurs des revendications 1 à 4, caractérisé en ce que l'élément de transmission (18) et la traverse de pressage (12) ou la plaque de glissement (11) se composent d'un matériau ou de matériaux présentant un faible coefficient de frottement.

**6.** Dispositif de pressage selon l'une ou plusieurs des revendications 1 à 5, caractérisé en ce que le piston de compression (3) est relié à la traverse de pressage (12) par l'intermédiaire d'un élément de retenue (24).

**7.** Dispositif de pressage selon la revendication 6, caractérisé en ce que le piston de compression (3) présente, dans la zone de son extrémité tournée vers la traverse de pressage (12), une épaule (10) qui est maintenue par l'élément de retenue (24) fixable à la traverse de pressage (12).

**8.** Dispositif de pressage selon les revendications 6 ou 7, caractérisé en ce que, latéralement entre l'épaule (10) et l'élément de retenue (24), est prévu un espace intermédiaire (27) se présentant sous la forme d'un jeu.

**9.** Dispositif de pressage selon l'une ou plusieurs des revendications 6 à 8, caractérisé en ce que l'élément de retenue se présente sous la forme d'une bague (24).

**10.** Dispositif de pressage selon l'une ou plusieurs des revendications 6 à 9, caractérisé en ce que l'élément de retenue (24) fixe la plaque de glissement (11).

**11.** Dispositif de pressage selon l'une ou plusieurs des revendications 1 à 10, caractérisé en ce que le joint d'étanchéité (15) se présente sous la forme d'un joint axial avec effet d'étanchéité dans le sens axial et radial.

**12.** Dispositif de pressage selon l'une ou plusieurs des revendications 1 à 10, caractérisé en ce que, dans le creux (4) du cylindre à presser (2), est disposé un élément de guidage (23) de faible étendue axiale.

**13.** Dispositif de pressage selon la revendication 12, caractérisé en ce que l'élément de guidage (23) se présente sous la forme d'une bague de guidage élastique, de façon privilégiée en matière synthétique.

**14.** Dispositif de pressage selon l'une ou plusieurs des revendications 1 à 13, caractérisé en ce que la face supérieure de la plaque de glissement (11) est conçue de façon plane.

**15.** Dispositif de pressage selon l'une ou plusieurs des revendications 1 à 13, caractérisé en ce que la face supérieure de la plaque de glissement (11) et la face inférieure du piston de compression (3) sont conçues de façon sphérique, le centre (M) du segment sphérique étant situé dans le plan de compression.

16. Dispositif de pressage selon l'une ou plusieurs des revendications 1 à 15, caractérisé en ce que l'assemblage de l'espace supérieur (8) avec l'espace inférieur (14) se compose d'au moins un creux de raccordement (19) dans le piston de compression (3).

EP 0 532 891 B1

Fig. 1

9

Fig. 2